# EUROPEAN PATENT APPLICATION

(11) **EP 4 124 958 A1**
(43) Date of publication of application: **01.02.2023**
(21) Application number: 21382708.2
(22) Date of filing: 28.07.2021
(51) Int. Cl.: G06F 11/14, G06F 21/71

(54) **UPDATE BACKUP AND FAILSAFE ROLLBACK IN SECURE ELEMENTS**

(71) Applicant: Giesecke+Devrient Mobile Security GmbH, 81677 München (DE)
(72) Inventor: Perarnau, Xavier, 08430 La Roca del Valles (ES); Couto, Marta, 08840 Viladecans (ES); Gifre, Clara, 08028 Barcelona (ES); Patino, David, 08620 Sant Vicenc dels Horts (ES); Ruau, Federico, 08907 Hospitalet de Llobregat (ES)
(74) Representative: Giesecke + Devrient IP

(57) **Abstract**

The present invention relates a method and an apparatus for updating software loaded on a secure element, SE, which SE comprises an update agent handler, and an update agent. In a first step, a request to backup a current version of software loaded on the SE is received at the SE. The request is preferably sent from a device, external to the SE. Upon receiving the backup request, the SE performs a secure backup of the current software version, and returns the software backup to the device, to be stored thereon. In a further step, the SE performs an update process of the current software version, to obtain an updated software version. If the update process fails, a rollback is performed at the SE to restore the software backup as a new current software version on the SE.

## Description

The present invention relates to secure elements in general and in particular to a secure element fitted with an update agent handler and an update agent for receiving software updates from an external device and for implementing a rollback mechanism in case of update failures occurring in the secure element.

### BACKGROUND OF THE INVENTION

Smart cards are widely used in a variety of systems such as mobile phones, payment cards, access cards, to provide identification, authentication, data storage and application processing.

Where the smart card contains security-critical applications and sensitive data, such as in the case of payment cards and the like, a secure element is used to store the data. A secure element is a tamper resistant element, TRE, that provides a secure memory and execution environment in which application code and application data can be securely stored and administered. The secure element ensures that access to the data stored on the card is provided only when authorized.

Such a secure element may exist in any form factor such as UICC, embedded SE, smartSD, smart microSD, etc.

A secure element may include one or more security domains (SDs), each of which includes a collection of data, such as operating system, personalization data, packages, applets, applications, and the like, which are authenticated using security keys. Thus, the operating system and applications are stored within the secure element in volatile and non-volatile memory modules, and are executed in a secured processor of the secure element.

The specification Global Platform Card Technology Open Firmware Loader for Tamper Resistant Element v1.3 (in the following referred by [1]) describes a standardized mechanism for loading firmware (that is, use case dependent data which may contain the operating system and application data) into a secure element. In particular, an Open Firmware Loader, OFL, is provided inside the secure element, and configured to receive images of operation system and personalization data, to perform security checks - particularly authentication and integrity checks - on the images, and to trigger installation of the image contents into a memory of the secure element, so as to install in the secure element an operating system and personalization data.

The specification as described in [1] defines ways on how a secure element is to be updated in a tamper proof way. However, in case of a failure in the update process, the updated software version (e.g., an updated operating system) cannot be loaded onto the secure element. The update has to be started again. In case the software to be updated is the operating system of the secure element, due to the failure of the update process, the secure element cannot boot the operating system anymore. The situation becomes even more cumbersome, particularly if the software version previously installed on the secure element and which is to be updated, has been already deleted. The secure element has to wait until another update is received, before being able to regain functionality.

It is therefore desirable to provide a solution for updating software on a secure element which addresses the above-mentioned drawbacks.

### SUMMARY OF THE INVENTION

The present invention addresses the above object by the subject-matter covered by the independent claims. Preferred embodiments of the invention are defined in the dependent claims.

According to a first aspect of the present invention, there is provided a method for updating software loaded on a secure element, SE, which SE comprises an update agent handler, and an update agent. In a first step, a request to backup a current version of software loaded on the SE is received at the SE. The request is preferably sent from a device, external to the SE. Upon receiving the backup request, the SE performs a secure backup of the current software version, and returns the software backup to the device, to be stored thereon. In a further step, the SE performs an update process of the current software version, to obtain an updated software version. If the update process fails, a rollback is performed at the SE to restore the software backup as a new current software version on the SE.

The proposed method provides an efficient solution to restore a previous version of a piece of software, such as an OS, on a secure element, in case of an update failure. More specifically, the proposed method allows to backup a current working version of the software, and to perform a rollback to restore the working version of the soft-ware at a later time, without any intervention by the secure element OEM. Stable functionality and robustness of the secure element against faulty software updates is thus achieved.

In some embodiments of the present invention, performing a secure backup comprises the update agent handler instructing the update agent to create a restore image, corresponding to the current software version.
Preferably, the restore image is created by encapsulating the current software version and securing it with cryptographic keys. The update agent handler may then return the restore image as the backup software to the device.

By encapsulating the current software version and securing it with the update agent handler's private cryptographic keys, a tamper resistant secured image is obtained for the backup. In this way it is ensured that the rollback process will securely restore the backup image, without any risk of a third party manipulating the backup image.

In some embodiments of the present invention, in a further step, a request to update the current software version is received at the SE, the update request comprising a software update. The update process is performed using the software update.

Preferably, upon receiving at the SE the update request, the method comprise further verifying the update request, and if the request is allowed, performing the update process.

In a preferred implementation of the update request verification, the update agent handler verifies integrity and confidentiality of the update request and of the soft-ware update contained therein.

By providing the update agent handler with the capability of verifying and authenticating the update request, the integrity and confidentiality of the data transfer is ensured, and the overall security of the update procedure is thus elevated.

In some embodiments, performing at the SE an update process of the current soft-ware version comprises updating the current software version based on the software update, deleting the current software version and loading the updated software version into the SE as the new current software version.

Several scenarios may be identified, which could lead to an update process failure.

In some embodiments, the update process is determined to have failed if during the performing of the software update process, the software update process is aborted before being completed.

In a preferred implementation, the update process is determined to have failed if after completing the software update process, the update agent handler reboots the new current software version and during the rebooting process a boot failure occurs. In this case, the update agent handler may instruct the update agent to perform the rollback.

In yet a further preferred implementation, the update process is determined to have failed if after completing the software update process, the new current software version is successfully booted, and the SE determines that there is a data inconsistency between data and applets stored in the SE and the new current software version. Preferably, data inconsistencies are detected by the update agent handler, by determining whether other updates in the SE are operational, that is, fully functional, without being impeded by the new update. If other updates are not operational, the update agent handler may instruct the update agent to perform the rollback.

Depending on the above-described several scenarios which may occur during performing the update, a rollback process is triggered to restore the previously backed-up software version, either directly by the update agent, or through the intermediary of the update agent handler.

In particular, in some embodiments of the present invention, performing a rollback to restore the software backup as the current software version on the SE comprises receiving at the SE from the device the software backup and instructing the update agent to perform loading of the software backup into the SE. Preferably, the backup software is received at the update agent loader, as the entry point for each piece of software to be loaded onto the SE, wherein the update agent loader instructs (i.e., passes control) to the update agent to perform the update.

Preferably, integrity and confidentiality of the backup software can be additionally checked by the update agent using its cryptographic keys. In this way it is ensured that the rollback process will securely restore the backup image, without any risk of a third party manipulating the backup image.

According to a second aspect of the present invention, there is provided a secure element, SE, comprising an update agent handler and an update agent. The update agent handler is configured to receive from a device a request to backup a current version of software loaded on the SE, instruct the update agent to generate a software backup of the current software version, and return the software backup to the device, to be stored thereon. Further, the update agent handler is configured to receive from the device a request to update the current software version, the update request comprising a software update, and to instruct the update agent to perform an update process of the current software version by using the software update. The update agent handler is further configured to, if the update process failed, instruct the update agent to perform a rollback to restore the software backup as a new current soft-ware version on the SE.

In some embodiments of the present invention, the update agent handler is further configured to perform the method according to any one of the preferred embodiments of the first aspect.

According to a further aspect of the present invention, there is provided an apparatus, comprising at least one processor, at least one memory including computer program code, and the at least one processor with the at least one memory and the computer program code, being arranged to cause the apparatus to at least perform requesting a secure element, SE, to perform backup of a current version of software loaded on the SE; receiving from the SE a backup of the current software version loaded on the SE, and storing the software backup in the memory; requesting the SE to update the current software version and receiving from the SE an update result; and if the update result indicates an update process failure, instructing the SE to perform a rollback to restore the software backup stored in the memory as a new current soft-ware version on the SE.

It has to be noted that all the devices, elements, units and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which:
FIG. 1 shows the architecture of a system and flow of data for implementing a method for updating software in a secure element according to an embodiment;
FIG. 2 shows a method for updating software in a secure element according to an embodiment;
FIG. 3 shows a flow chart of the method for updating software in a secure element according to a further embodiment;
FIG. 4 shows a sequence diagram implementing steps of the method for updating software according to a further embodiment;
FIGs. 4A, 4B, and 4C show sections of Fig. 4 in an enlarged view; and
FIG. 5 shows a block diagram of components of an apparatus according to an embodiment.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

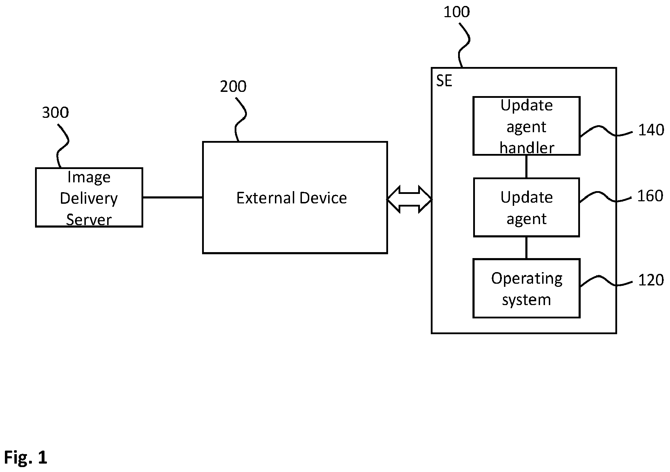

Fig. 1 shows the architecture of a system and flow of data for implementing a method for update backup and failsafe rollback in a secure element according to an embodiment.

The secure element, SE, 100 comprises an operating system, OS, 120, an update agent handler 140, and an update agent 160.

The update agent 160 is a loader entity allowing the provisioning of software (such as, for instance, use case dependent firmware) within the SE. The update agent is the main entity in charge of the update of the software in the secure element, as well as any other procedure related to it (e.g., update, restore, rollback). Through this document, the update agent is interchangeable referred to also as a "SE Bootloader".

The update agent handler 140 is the entity in the SE 100 in charge of handling the entry point for the software to be executed in the card respectively secure element 100. That is, the update agent handler 140 is a program running in the SE and managing the communication with an external device 200. In particular, the update agent handler 140 is configured to pass control to the update agent 160, for the update agent to execute various steps of the method for updating software according to embodiments of the present invention. With other words, it can be said that the update agent handler is in charge of deciding which piece of software is executed while booting the SE, while the update agent is the entity carrying out the load/ update of the software. Through this document, the update agent handler is interchangeable referred to also as a "SE Bootloader handler".

The operating system, OS, 120, contained within the SE 100, may comprise the piece of software that is to be updated/restored. The OS may be part of firmware, which is use case dependent data, loaded on the SE. Preferably, the update agent 160 is loaded in factory together with the OS 120 and OS-personalization.

After being loaded, the update agent 160 is personalized, that is loaded with data that uniquely identifies the update agent. This may be done via an API between the OS and the update agent. Personalization data may include a variety of cryptographic keys and algorithm information for performing the update. In particular, through personalization it is achieved that the keys, the update agent uses to perform the update, are specific for each project.

A new software is uploaded onto the SE or an existing software is updated on the SE by means of a software (or OS) image. A software image (or OS image) is a generic data format encapsulating a software version and cryptographic data to be used by the update agent. Through this document, the term "software" refers to the OS loaded onto the SE but also more generally to any piece of software contained in the SE.

The external device 200 (which is external of the SE) may fetch a software or OS image, for instance from an image delivery server 300, and provide the image to the SE through interaction with the update agent handler 140. With other words, the external device may describe whoever is in control and communicates with the SE. It can be the LPA (Local Profile Assistant in the device), a terminal, or whatever device it is that the SE is mounted on. A mobile device might be one of the most common examples (normally via the LPA though). The device is further responsible for storing the generated software backup.

A current OS (also referred to as current software, current version of software) refers to the piece of software (i.e., a software image) loaded in the SE at a given time.

When the software is updated, the new current software version is the software image that has been loaded via the update process onto the SE.

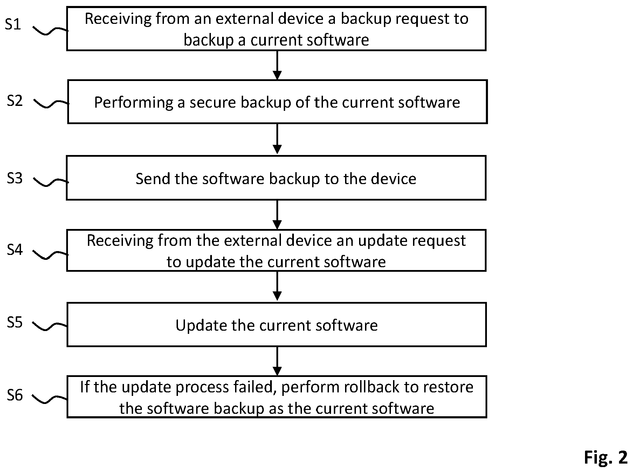

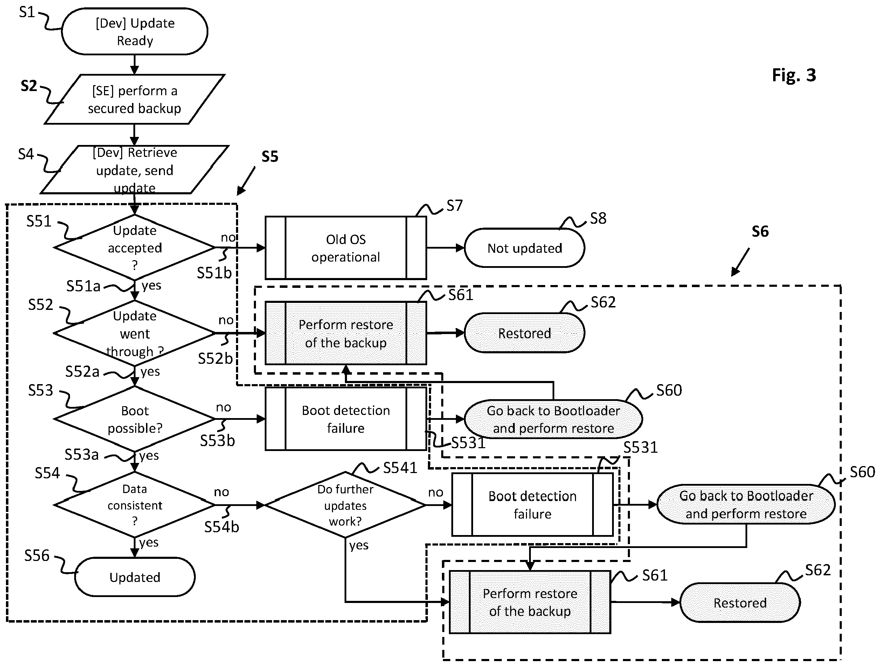

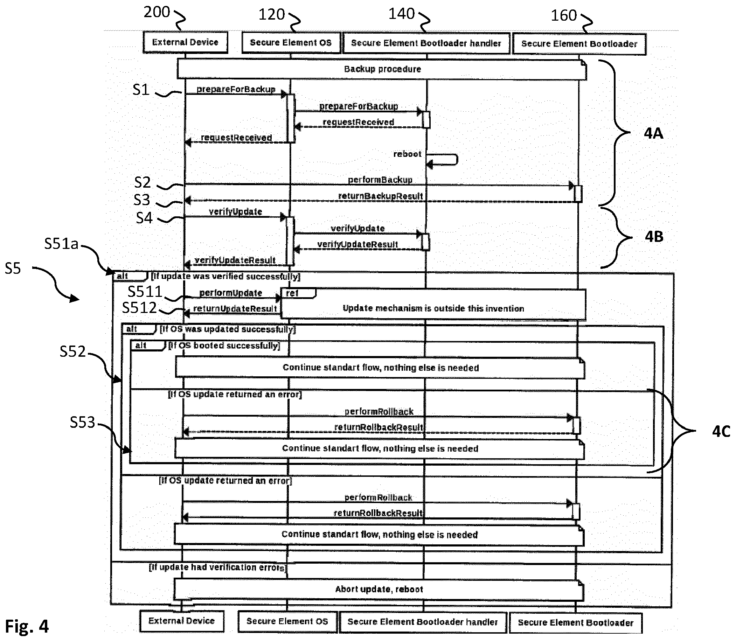

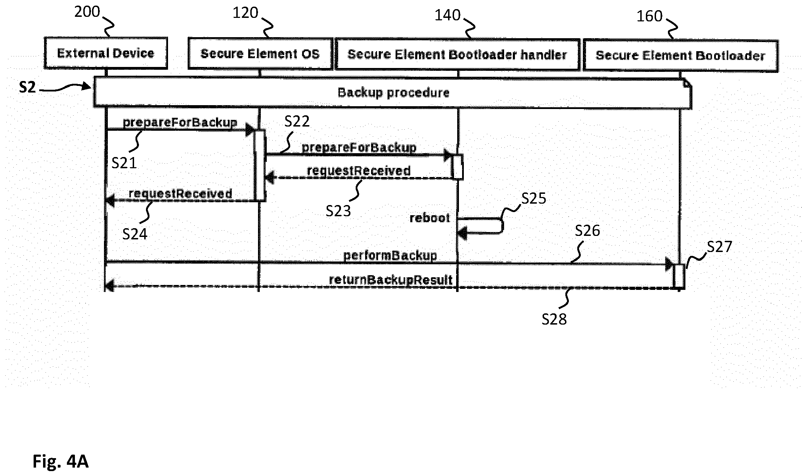

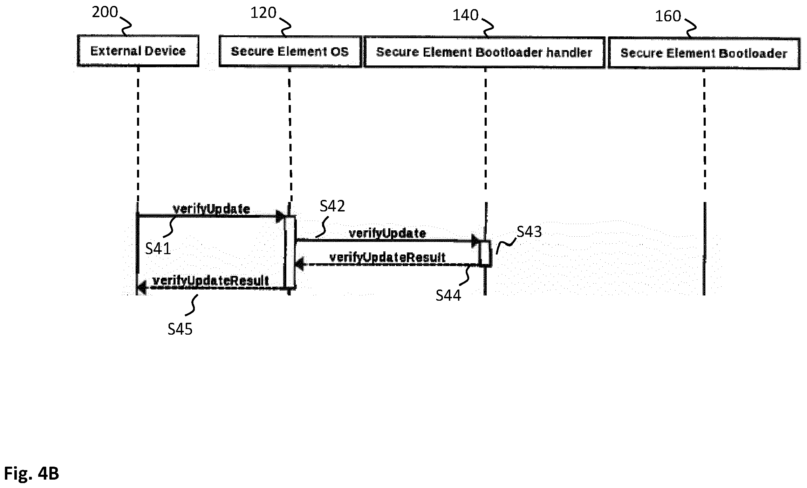

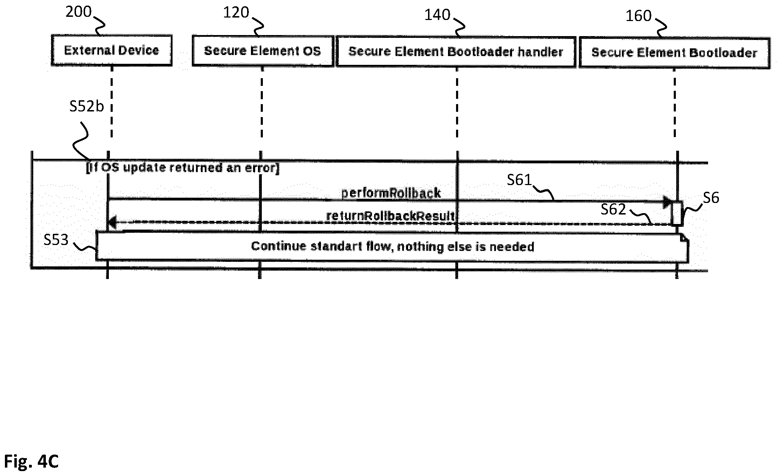

Fig. 2 shows a flow chart of the main steps of a method for software update in a secure element according to an embodiment. Fig. 3 shows a flow chart of the method for software update including further sub-steps according to a further embodiment. Detailed implementation steps are further illustrated in the sequence diagram of Fig. 4, with further reference to specific parts 4A, 4B, and 4C, respectively.

With reference to Fig. 2, in a first step S1, a request to backup a current version of software (e.g., OS 120) loaded on the SE, is received at the SE 100. The request may be send from an external device 200.

The backup request may be received at the update agent handler via a command (e.g., an APDU command), or most likely via an authenticated process which might imply a signature or cryptogram verification, depending on the decided security required. It would be appropriate for this to be at least as secure as the OS download itself.

Upon receiving the update request, a secure backup of the current software version is performed in step S2, and the software backup is returned to the device 200 in step S3, to be stored thereon.

This backup process is presented in more details in Figs. 4 and 4A. FIG. 4 shows a sequence diagram implementing steps of the method for update backup and failsafe rollback according to an embodiment, while Fig. 4A shows the part from Fig. 4, covering the backup process.

In particular, the update agent handler 140 instructs, S26, the update agent 160 to create a restore image, corresponding to the current software version 120, such as, the current version of the OS. Preferably, the update agent creates (as depicted in Fig. 4A, step S27) the restore image by encapsulating the current software version 120 and securing it with its cryptographic keys. The update agent handler 140 returns, S28, the restore image as the backup software to the device 200. Other procedures for the update agent 160 to create a restore image can be employed such as similar procedures used for an actual OS download, as for instance described in [1], preferably by additionally identifying the image using a flag as being a "restore" image.

Additional preparation steps may be performed, such as, receiving from the device 200 an instruction/ command to prepare for backup, S21. This command may cause the SE update agent 160 to perform a system restart, S25. Optionally, the update agent 160 may send a confirmation of the received request back to the external device, S23, S24. This confirmation might be send through the OS 120.

With reference to Fig. 2, the failsafe update process may continue in step S4, where an update request is received from the external device 200, instructing the SE 100 to perform an update of the software version currently stored in the SE. This step is optional, as the SE could also be triggered internally to perform a software update, such as for instance, periodically, without requiring an explicit command to be send by the external device.

With reference to Fig. 4B, in case of externally triggered updates, the SE may receive in step S41 a request to verify the update, sent from the device 200 for instance through an APDU command. The request may be received at the OS 120, which pass control to the update agent handler 140 (step S42) to verify the update request. Preferably, verifying the update request comprises the update agent handler 140 verifying the integrity and confidentiality of the update request and of the software update contained therein in step S43. The result of the verification is subsequently sent to the device 200 via a verifyUpdateResult (S44, S45). If the update request was not accepted by the SE (step S51b in Fig. 3), the software is not updated (e.g., the old OS remains operational S7) and the procedure is terminated (S8).
If the update request was verified successfully (S51, S51a), the actual update process is started at the SE 100 in step S511. Preferably, the SE preforms in step S5 and corresponding sub-steps the update process of the current software version. Preferably, a software update is received from the device 200, and the update process is performed using the software update. In the course of this process, the current software version is deleted and the updated software version is stored into the SE as the new current software version. The SE may return to the device an update result in step S512, preferably via a suitable APDU command, such as, "returnUpdateResult".

The update process is interrelated with the rollback process, as depending on several scenarios which may occur while performing the update, a rollback process may be triggered to restore the previously backed-up software version. This will be detailed in the following with reference to the update process in step S5 and its sub-steps S51, S52, S53, in connection with the rollback process in step S6, and with reference to Figs. 3 and 4.

If an update has been accepted by the SE 100 (the block identified by S5 in Fig. 3), several different scenarios may occur after the update process has been started, which cause the rollback process to be started (the block identified by S6 in Fig. 3).
a) The update is not completed, some error occurred during the update process and the update process has been aborted (Fig. 3, "no" branch in step S52b). The current software (e.g., the original OS) has already been deleted from the card. That is, there is no "current OS" in the SE anymore. The SE may return in step S512 to the device 200, through the update agent handler 140, the update result indicating an update failure. In this case, the restore/ rollback process is initiated in step S6 to return to the original OS. The entity in charge of performing the update is the update agent 160. As the control is already with the update agent, the update agent is, upon detecting an update failure, ready to initiate in step S6 the rollback process.
b) The update is completed (Fig. 3, "yes" branch in step S52b), however, the operating system cannot be rebooted (Fig. 3, "no" branch in step S53b). This means the new OS image loaded has some problems/malfunction that prevents it from starting properly, which may be detected in step S531. The SE may return in step S512 to the device 200, through the update agent handler 140, the update result indicating a boot failure. In this case, the control is returned in step S60 from the OS 120 to the update agent 160 (the update agent handler 140 would be in charge of this return of control to the update agent 160), and then the restore of the backup is performed in step S61 by the update agent 160. The current OS at the end of step S62 is thus the same as the original, as the backup was restored.
c) After the new OS image is loaded and the OS boots properly (Fig. 3, "yes" branch in step S53a), a data inconsistency/incompatibility between data and applets stored in the SE and the new current software version may be detected (step S54). This is particularly then the case, if the newly loaded and booted software is not backward compatible. Such a backward incompatibility between the data in the card/SE and the new OS image, may lead to malfunction or otherwise impede a proper functioning of the SE. The SE may return in step S512 to the device 200, through the update agent handler 140, the update result indicating an update failure or a boot failure, and a rollback process for restoring the backup version of the software/OS may be performed. Depending on the type of data incompatibility issue, it might be necessary for the update agent to assume control again, but in the end the restore backup is performed. For instance, data incompatibility may occur if other updates in the SE are interfering with the new update, causing the other updates to malfunction, in particular, causing other updates and software parts on the SE to fail during a boot process. In this case, other updates are not operational and the update agent handler 140 will pass control to the update agent 160, for the update agent to perform the rollback process.
d) If all above-described test have been passed successfully, that is, new software/OS image is loaded, it properly boots, and its data is consistent, the update procedure is terminated in step S56, with the new, updated, software/OS installed in the SE.

Fig. 4C illustrates the steps performed during the rollback process S6. Preferably, performing a rollback to restore the software backup as the current software version on the SE 100 comprises receiving at the SE 100, from the device 200, the software backup (for instance as part of a "perform rollback" command sent in step S61), and instructing by the update agent handler 140 the update agent 160 to perform loading of the software backup into the SE 100.

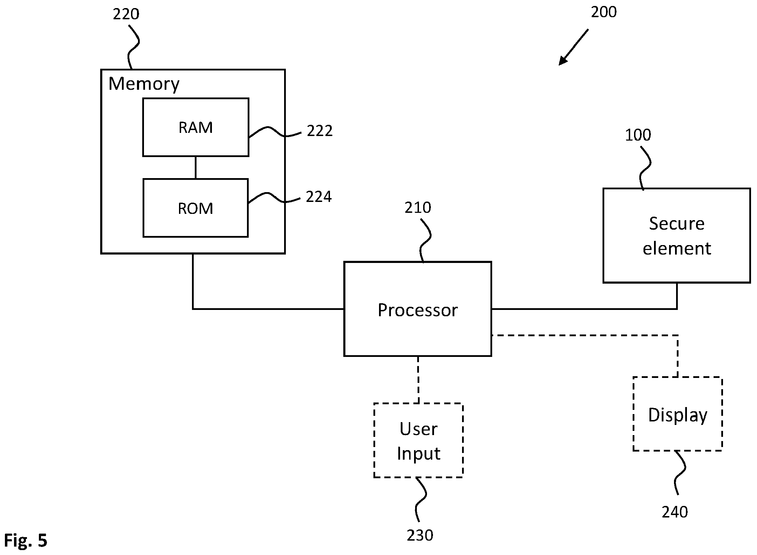

Fig. 5 is a schematic diagram of components of an apparatus according to an embodiment. The apparatus may be a device in communication with a secure element (e.g., the SE 100 in Fig. 1), or a device, the secure element 100 is embedded on, such as, for instance the device 200 of Fig. 1. The apparatus may have a processor 210, a memory 220 closely coupled to the processor and comprised of a RAM 222 and a ROM 224, and optionally, a user input 230 and a display 240. The processor may be connected to the secure element 100 of Fig. 1, through a suitable interface, to control the secure element 100. In particular, the processor 210 may request the SE 100 to perform backup of a current version of software 120 loaded on the SE 100. Upon receiving from the SE 100 a backup of the current software version 120, the processor my store the software backup in the memory 210. Furthermore, the processor 210 may instruct the SE 100 to update the current software version 120, by sending a request comprising a software update. Upon receiving from the SE 100 an update result, the processor may check the update result, and if the update result indicates an update process failure, instruct the SE 100 to perform a rollback to load the software backup stored in the memory 210, to therefore restore the software backup as a new current software version on the SE. Preferably, the update result is one of update failure or boot failure, as described above in connection with the three failure scenarios that might occur during the update process.

The methods and apparatus as described through the embodiments above, allow an update agent to roll back to a previous software version in the event of an unsuccessful update in a safe way. With the proposed failsafe rollback solution, the system stability in case of a faulty software/OS update is increased. The solution provides flexibility and independency of the card manufacturer, as a SE OEM does not need to intervene if a rollback is needed.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A method for updating software loaded on a secure element, SE (100), wherein the SE comprises an update agent handler (140) and an update agent (160), the method comprising:
- receiving (S1) at the SE (100) from a device (200) a request to backup a current version of software (120) loaded on the SE (100);
- performing (S2) at the SE (100) a secure backup of the current software version (120), and returning (S3) the software backup to the device (200), to be stored thereon;
- performing (S5) at the SE (100) an update process of the current software version, to obtain an updated software version; and
- if the update process failed, performing (S6) a rollback to restore the software backup as a new current software version (120) on the SE (100).

2. The method according to claim 1, wherein performing (S2) a secure backup comprises the update agent handler (140) instructing (S26) the update agent (160) to create a restore image, corresponding to the current software version (120).

3. The method according to claim 2, wherein the update agent (160) is configured to create (S27) the restore image by encapsulating the current software version (120) and securing it with cryptographic keys; and wherein the update agent handler (140) is configured to return (S28) the restore image as the backup software to the device (200).

4. The method according to any one of the preceding claims, further comprising receiving (S4) at the SE (100) a request to update the current software version (120), the update request comprising a software update, wherein the update process is performed (S5) using the software update.

5. The method according to claim 4, wherein upon receiving (S4) at the SE (100) the update request, the method comprise further verifying (S51) the update request, and if the request is allowed, performing the update process.

6. The method according to claim 5, wherein verifying (S51) the update request comprises instructing (S512) the update agent handler (140) to verify (S513) integrity and confidentiality of the update request and of the software update contained therein.

7. The method according to any one of the preceding claims, wherein performing (S5) at the SE (100) an update process of the current software version (120) comprises updating the current software version based on the software update, deleting the current software version and loading the updated software version into the SE (100) as the new current software version.

8. The method according to claim 7, wherein the update process is determined to have failed if during the performing (S5) of the software update process, the software update process is aborted (S52, S52b) before being completed.

9. The method according to claim 7, wherein the update process is determined to have failed if after completing the software update process (S52, S52a), the update agent handler (140) reboot the new current software version and during the rebooting process a boot failure occurs (S53, S53b).

10. The method of claim 9, further comprising the update agent handler (140) instructing (S60) the update agent (160) to perform (S61) the rollback.

11. The method according to claim 7, wherein the update process is determined to have failed if after completing the software update process (S52, S52a), the new current software version is successfully booted (S53, S53a), and the SE (100) determines (S54, S54b) that there is a data inconsistency between data and applets stored in the SE (100) and the new current software version.

12. The method of claim 11, further comprising the update agent handler (140) determining (S541) whether other updates in the SE (100) are operational, and if other updates are not operational, instructing (S60) the update agent (160) to perform (S61) the rollback.

13. The method according to any one of the preceding claims, wherein performing (S6) a rollback to restore the software backup as the current software version on the SE (100) comprises:
- receiving at the SE (100) from the device (200) the software backup; and
- instructing (S61) by the update agent handler (140) the update agent (160) to perform loading of the software backup into the SE (100).

14. A secure element, SE (100), comprising an update agent handler (140) and an update agent (160), wherein the update agent handler (140) is configured to:
- receive from a device (200) a request to backup a current version of software (120) loaded on the SE (100), instruct the update agent (160) to generate a software backup of the current software version (120), and return the software backup to the device (200), to be stored thereon;
- receive from the device (200) a request to update the current software version (120), the update request comprising a software update, and to instruct the update agent (160) to perform an update process of the current software version by using the software updated; and
- if the update process failed, instruct the update agent (160) to perform a rollback to restore the software backup as a new current software version on the SE (100).

15. An apparatus (200), comprising at least one processor (210), at least one memory (220) including computer program code, and the at least one processor (210) with the at least one memory (220) and the computer program code, being arranged to cause the apparatus (200) to at least perform:
- requesting a secure element, SE (100), to perform backup of a current version of software (120) loaded on the SE (100);
- receiving from the SE (100) a backup of the current software version (120) loaded on the SE (100), and storing the software backup in the memory (220);
- requesting the SE (100) to update the current software version (120), and receiving from the SE (100) an update result; and
- if the update result indicates an update process failure, instructing the SE (100) to perform a rollback to restore the software backup stored in the memory (220) as a new current software version (120) on the SE (100).
